# EUROPEAN PATENT APPLICATION

(11) **EP 4 644 693 A2**
(43) Date of publication of application: **05.11.2025**
(21) Application number: 25173423.2
(22) Date of filing: 29.04.2025
(51) Int. Cl.: F03H 1/00, B64G 1/22, B64G 1/40

(54) **INTEGRATED ION THRUSTER UNIT FOR A SPACECRAFT**

(30) Priority: 30.04.2024 US 202463640488 P
(71) Applicant: Accion Systems Inc., dba Revolution Space, Boston, MA 02129 (US)
(72) Inventor: Garber, Darren, Boston 02129 (US); Richards, Paul, Boston 02129 (US); Zachar, Adam, Boston 02129 (US); Daidone, Gene, Boston 02129 (US); Freeman, Dakota, Boston 02129 (US); Maulbetsch, Will, Boston 02129 (US); Bolster, Justine, Boston 02129 (US)
(74) Representative: Korenberg, Alexander Tal

(57) **Abstract**

An integrated ion thruster unit for a spacecraft can include a unit housing including a thrust face, and a plurality of tiles arranged in an array on the thrust face. Each of the tiles can include an emitter and an extractor configured to provide a reference voltage with respect to the emitter. The emitter can include a plurality of tips configured to emit ions in a thrust direction from an ionic liquid propellant in response to an applied voltage.

## Description

### TECHNICAL FIELD

The present technology pertains to ion thruster systems for spacecraft, and more specifically to an integrated ion thruster unit that can be configured to accommodate payload envelope dimensions associated with a spacecraft.

### BACKGROUND

On-orbit propulsion systems for spacecraft must meet a desired thrust and life cycle profile, while to the extent possible minimizing a weight and volume footprint of the propulsion system within the spacecraft. Electrospray emitters operating on capillary-fed ionic liquids fed have been proposed to meet these requirements, as discussed for example in United States Pat. Nos. 10,236,154 to Lozano et al. and 10,410,821 to Lozano et al., both of which are hereby incorporated by reference in their entirety. Additional details of the development of electrospray emitters are disclosed in United States Pat. No. 8,030,621 to Lozano et al., which is also hereby incorporated by reference in its entirety.

Ionic liquids are molten salts at room temperature and exhibit extremely low vapor pressures. Ionic liquids are formed by positive and negative ions which can be directly extracted and accelerated to produce thrust when used in bipolar operation. Arrays of electrospray emitters can be formed, with each emitter in the array having a micron-scale geometry. When the emitter array is fed with the ionic liquid, for example through capillary action from a base of the array, application of a sufficiently high voltage causes emission of ions (for example, via ion evaporation directly from the liquid or formation of a Taylor cone at a tip of each emitter). The high-speed ions emitted can produce a net thrust force. However, arrangement, assembly, and unified control of a significant number of the micron-scale emitters must be achieved in order to enable practical and efficient integration into on-orbit ion thruster units for spacecraft. For example, but not by way of limitation, in order to be of service in some cases, the ion thruster units must fit within spacecraft payload envelopes defined by the launch systems used to deliver the spacecraft into orbit.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

The present disclosure introduces a novel approach to on-board propulsion systems for spacecraft. In particular, embodiments of the disclosure include a tile that provides hundreds or thousands of emitter tips in a spaced relationship with an extractor to facilitate ion emission when a threshold voltage is applied. The tile can be configured to passively wick the ionic liquid propellant to the emitter tips. Multiple tiles can be arranged in an array on a thrust face of an integrated ion thruster unit, and a housing of the integrated unit can enclose a reservoir of the ionic liquid propellant as a common feed for the tiles in the array.

In addition, a configuration of the integrated ion thruster unit can enable the unit to be sized for positioning within a separation ring used to couple the spacecraft to a payload adaptor of a launch vehicle, which can enable more of the launch payload envelope to be devoted to the spacecraft's primary mission, rather than to the spacecraft's on-orbit propulsion system. Additionally or alternatively, non-propulsion-related components can be enclosed within the integrated unit housing, further saving space within the payload envelope. Moreover, the characteristics of the integrated ion thruster unit can facilitate an on-orbit retrofit to an existing orbital spacecraft, for example if the spacecraft's original on-orbit propulsion system is depleted.

In accordance with an embodiment of the present disclosure, an integrated ion thruster unit for a spacecraft is provided. The integrated ion thruster unit can include a unit housing including a thrust face, and a plurality of tiles arranged in an array on the thrust face. Each of the tiles can include an emitter and an extractor configured to provide a reference voltage with respect to the emitter. The emitter can include a plurality of tips configured to emit ions in a thrust direction from an ionic liquid propellant in response to an applied voltage.

In accordance with another embodiment of the present disclosure, a launch assembly is provided. The launch assembly can include a spacecraft and an integrated ion thruster unit coupled to the spacecraft. The integrated ion thruster unit can include a unit housing including a thrust face, and a plurality of tiles exposed on the thrust face and configured to emit ions in a thrust direction from an ionic liquid propellant stored within the unit housing. The launch assembly can also include a separation ring coupled to the spacecraft and configured to couple to a payload adaptor and to selectively cause separation of the spacecraft from the payload adaptor. The separation ring can extend from a first edge adjacent to the spacecraft to a second edge and define a separation ring aperture extending therethrough from the first edge to the second edge, and the unit housing can extend within the separation ring aperture and extend substantially to a payload adaptor side of the first edge.

In accordance with another embodiment of the present disclosure, a method of assembling a launch assembly is provided. The method can include coupling an integrated ion thruster unit to a spacecraft. The integrated ion thruster unit can include a unit housing including a thrust face, and a plurality of tiles exposed on the thrust face and configured to emit ions in a thrust direction from an ionic liquid propellant stored within the unit housing. The method can also include coupling a separation ring to the spacecraft. The separation ring can be configured to couple to a payload adaptor and to selectively cause separation of the spacecraft from the payload adaptor, wherein the separation ring extends from a first edge adjacent to the spacecraft to a second edge and defines a separation ring aperture extending therethrough from the first edge to the second edge, and wherein the unit housing extends within the separation ring aperture and extends substantially to a payload adaptor side of the first edge.

In accordance with another embodiment of the present disclosure, a method of retrofitting an integrated ion thruster unit to a spacecraft is provided. The method can include delivering the integrated ion thruster unit to an orbital rendezvous with the spacecraft. The integrated ion thruster unit can include a unit housing including a thrust face, and a plurality of tiles exposed on the thrust face and configured to emit ions in a thrust direction from an ionic liquid propellant stored within the unit housing. The method can also include mechanically coupling the integrated ion thruster unit to the spacecraft in orbit.

### BRIEF DESCRIPTION OF THE DRAWINGS

In order to describe the manner in which the above-recited issues can be addressed, a more particular description of the principles briefly described above will be rendered by reference to specific embodiments thereof that are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIG. 1A is a perspective view of an example electrospray tile in accordance with embodiments of the present disclosure;
FIG. 1B is an exploded view of the tile shown in FIG. 1A in accordance with embodiments of the present disclosure;
FIG. 2 is an enlarged detail view of an example emitter of the tile shown in FIG. 1A. taken along lines 2-2 shown in FIG. 1B, in accordance with embodiments of the present disclosure;
FIG. 3A is a schematic elevation view of an example launch assembly, including an example spacecraft and an example separation ring, coupled to an example payload adaptor in accordance with embodiments of the present disclosure;
FIG. 3B is a schematic perspective view of an example spacecraft envelope defined by the launch assembly shown in FIG. 3A in accordance with embodiments of the present disclosure;
FIG. 4A is a schematic elevation view of an example integrated ion thruster unit mounted on the spacecraft in the launch assembly shown in FIG. 3A in accordance with embodiments of the present disclosure;
FIG. 4B is a schematic perspective view of the integrated ion thruster unit shown in FIG. 4A in combination with the separation ring shown in FIG. 4A in accordance with embodiments of the present disclosure;
FIG. 4C is a schematic sectional view of an example interior of the integrated ion thruster unit taken along lines C-C in FIG. 4B, in accordance with embodiments of the present disclosure;
FIG. 5 is a schematic perspective view of another example integrated ion thruster unit in accordance with embodiments of the present disclosure;
FIG. 6 illustrates an example method of assembling a launch assembly in accordance with embodiments of the present disclosure; and
FIG. 7 illustrates an example method of retrofitting an integrated ion thruster unit to a spacecraft in accordance with embodiments of the present disclosure.

### DESCRIPTION OF EXAMPLE EMBODIMENTS

Various example embodiments of the disclosure are discussed in detail below. While specific implementations are discussed, it should be understood that this description is for illustration purposes only. A person skilled in the relevant art will recognize that other components and configurations may be used without parting from the spirit and scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment. Such references mean at least one of the example embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative example embodiments mutually exclusive of other example embodiments. Moreover, various features are described which may be exhibited by some example embodiments and not by others. Any feature of one example can be integrated with or used with any other feature of any other example.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any example term. Likewise, the disclosure is not limited to various example embodiments given in this specification.

Without intent to limit the scope of the disclosure, examples of instruments, apparatus, methods and their related results according to the example embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims or can be learned by the practice of the principles set forth herein.

For clarity of explanation, in some instances the present technology may be presented as including individual functional blocks representing devices, device components, steps or routines in a method embodied in software, or combinations of hardware and software.

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, it may not be included or may be combined with other features.

As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term).

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

### ELEMENTS OF AN ELECTROSPRAY THRUSTER SYSTEM

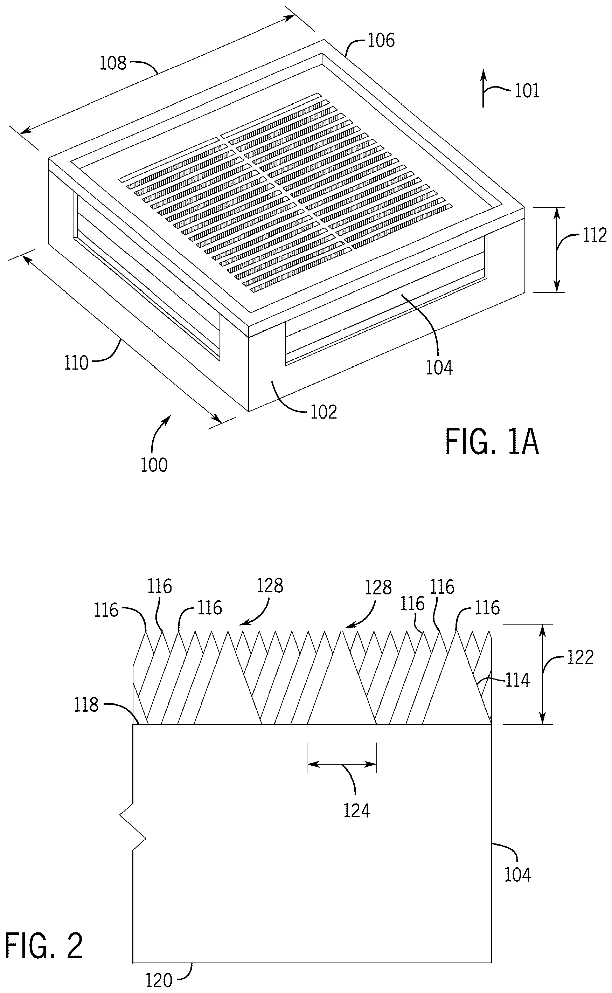

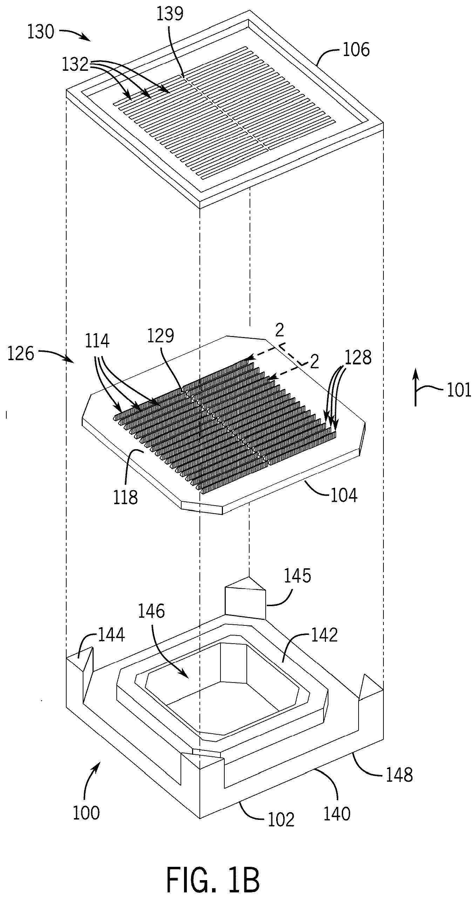

FIG. 1A is a perspective view of an example embodiment of an electrospray tile 100. FIG. 1B is an exploded view of the tile 100. In the example embodiment, the tile 100 includes a frame 102, and an emitter 104 and an extractor 106 each coupled to the frame. For example, each of the emitter 104 and the extractor 106 can have a generally flattened profile, and the frame 102 can be configured to provide primary structural support for the tile 100, to establish a spaced and oriented relationship between the emitter 104 and the extractor 106, and to facilitate coupling of the tile 100 to an integrated ion thruster system, as will be described in more detail below.

In the example embodiment, the tile 100 has a generally rectangular profile that defines a width 108 and a length 110 in a plane perpendicular to a thrust direction 101. The thrust direction 101 can be the net direction in which ions are emitted during operation. For example, the tile can have a width 108 in a range of about 0.25 to 3 centimeters (cm) and a length 110 in a range of about 0.25 to 3 cm. For another example, in some embodiments, the tile 100 can have a square profile with the width 108 and length 110 each equal to about 1.3 cm. The generally rectangular or square profile can facilitate packing of tens, hundreds, or thousands of tiles 100 into an integrated ion thruster, as will be descried in more detail below. Other profile shapes and sizes are also contemplated. In the example embodiment, the tile 100 has a thickness 112 of about 2 to 5 millimeters (mm) along the thrust direction 101. Other thicknesses are also contemplated.

FIG. 2 is an enlarged detail view of an embodiment of the emitter 104, taken along lines 2-2 shown in FIG. 1B, illustrating an example embodiment of emitter bodies 114 defined on and extending from a base surface 118 of the emitter 104. The emitter can also include a wetting surface 120 opposite the base surface 118. The base surface 118 and the wetting surface 120 each can be perpendicular to the thrust direction 101. Each of the emitter bodies 114 can extend away from the base surface 118 in the thrust direction 101 to a tip 116. The tip 116 is configured to be wetted with the ionic liquid propellant. For example, the emitter 104 can be configured to wick ionic liquid propellant from the wetting surface 120 to the plurality of tips 116 of the emitter. For example, the emitter 104 can be formed from a porous material, and the pores (not shown) can be sized to enable passive wicking of the ionic liquid via capillary action in the pores.

The emitter bodies 114 can be shaped to provide a field sharpening effect at the tips 116 for emission of ions under application of a voltage that equals or exceeds a threshold voltage for the emitter 104. For example, the emitter bodies 114 can taper from a base width 124 in a range of 50 to 150 microns (µm) at the base surface 118 to the tip 116, which can have a radius of curvature of less than 10 µm. Other shapes for the emitter bodies 114 are also contemplated. The emitter bodies can have a height 122, from the base surface 118 to the tip 116, in a range of 200 to 500 µm. Other heights for the emitter bodies 114 are also contemplated. The threshold voltage can be greater than or equal to about 400 volts. Other threshold voltages are also contemplated.

In the example embodiment, the emitter 104 can include emitter bodies 114 (and, therefore, tips 116) numbering in a range between 200 and 10,000. In other examples, the emitter 104 can include emitter bodies 114 (and, therefore, tips 116) numbering in a range between 1,000 and 3,000. Other numbers of tips 116 are also contemplated. In the example embodiment, the emitter bodies 114 can be arranged in a tip pattern 126 on the base surface 118. For example, the tip pattern 126 can include rows 128 of emitter bodies 114 extending parallel to the width 108 of the tile 100, with the rows 128 spaced apart along the length 110 of the tile 100. Other tip patterns 126 are also contemplated.

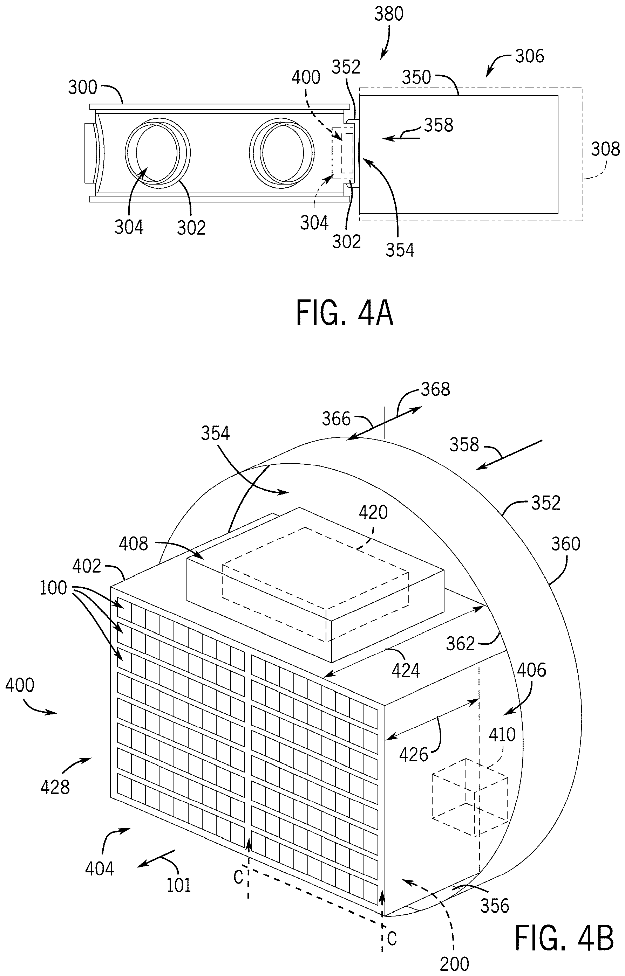

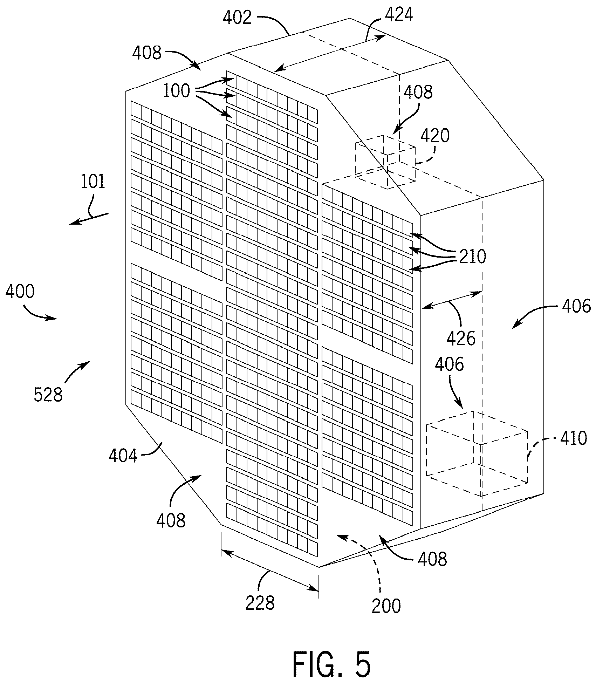

The extractor 106 can be configured to implement a counter-electrode for the emitter 104. For example, a power source, such as power source 410 (shown in FIGs. 4B and 5), can be configured to apply a voltage to the ionic liquid in communication with the emitter 104, and the extractor 106 can be configured as a reference or ground voltage with respect to the emitter 104. It should be noted that the "ground" voltage at the extractor 106 can be, but is not limited to being, the spacecraft ground. In other words, in some implementations, the reference voltage at the extractor 106 can be biased from spacecraft ground. The extractor 106 can include extractor apertures 132 sized and positioned to permit passage therethrough, in the thrust direction 101, of ions extracted from the tips 116. The extractor apertures 132 can be arranged in an aperture pattern 130 configured to register with the tip pattern 126. For example, the aperture pattern 130 can include apertures 132 extending parallel to the width 108 of the tile 100 and spaced apart along the length 110 of the tile 100, such that each aperture 132 is aligned in the thrust direction 101 with a corresponding one of the rows 128 of the example tip pattern 126 described above. For another example, the aperture pattern 130 can include a grid support bar 139 extending parallel to the length 110 of the tile at a mid-portion of the width 108, and the tip pattern 126 can include a break 129 in the rows 128 that is aligned in the thrust direction 101 with the grid support bar 139 (such that the grid support bar 139 does not block emissions in the thrust direction 101 from any of the tips 116). Other aperture patterns 130 are also contemplated.

The frame can include a frame body 140 configured to position the extractor 106 parallel to, and spaced apart along the thrust direction 101 from, the emitter 104. For example, the frame body 140 can include a first surface 142 configured for positioning of the emitter 104 thereon. The frame body can also include a second surface 144 positioned beyond the first surface 142 in the thrust direction 101 and configured for positioning of the extractor 106 thereon. For example, the second surface 144 can be defined by a plurality of legs 145 extending from corners of the frame body 140, and the first surface 142 can be defined by a shelf extending from a portion of the frame body 140 interior to the corners. Suitable bonding materials, such as epoxies, can be used to mount the emitter 104 and the extractor 106 to the frame 102. Other configurations for the frame body 140 are also contemplated.

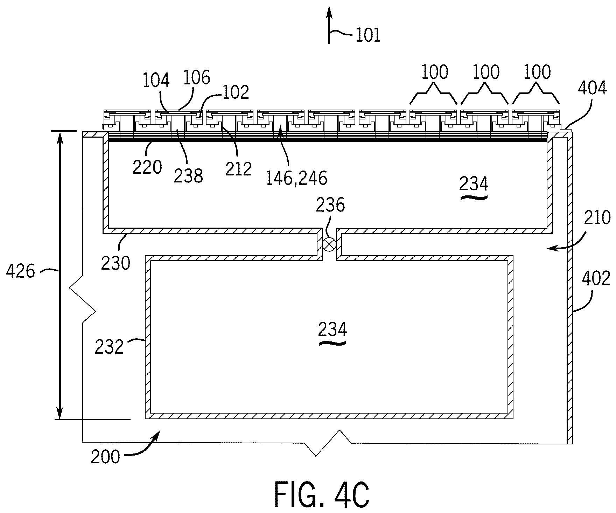

The frame body 140 can also define a frame channel 146 extending therein and configured to couple the wetting surface 120 of the emitter 104 into fluid communication with a reservoir 230 (shown in FIG. 4C) of ionic liquid propellant. In the example embodiment, the frame body 140 includes a closed perimeter portion 148, and the frame channel 146 extends centrally through the closed perimeter portion 148 in the thrust direction 101. Other configurations for the frame channel 146 are also contemplated.

As demonstrated in the Lozano patents previously incorporated by reference herein, in some embodiments each tip 116 can produce more than 0.02 micro-Newtons (µN) of thrust under application of the threshold voltage as described above with a suitable ionic liquid propellant. Thus, a single tile 100 with 1,000 tips 116 can produce thrust in the thrust direction 101 of more than 20 µN. Other values of thrust per tip and other numbers of tips 116 per tile 100 are also contemplated.

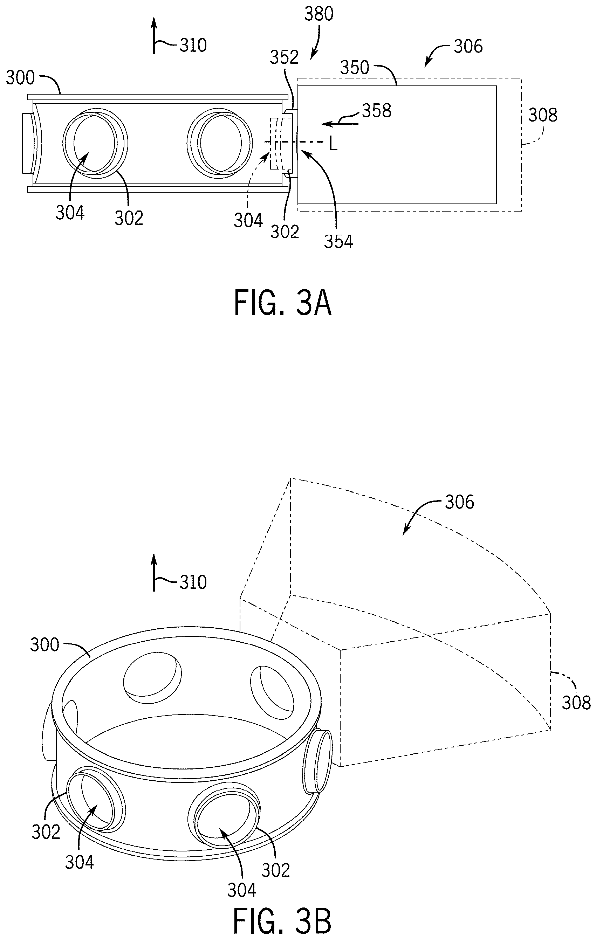

FIG. 3A is a schematic elevation view of an example launch assembly 380, including an example spacecraft 350 and an example separation ring 352, coupled to an example payload adaptor 300. FIG. 3B is a schematic perspective view of an example spacecraft envelope 306 defined by the launch assembly 380. The payload adaptor 300 is configured to couple multiple spacecraft, such as the spacecraft 350, to a launch vehicle (not shown) for delivery of the spacecraft into an initial orbit. The launch assembly 380 defines, for each spacecraft to be carried by the launch vehicle, the spacecraft envelope 306 in which the spacecraft 350 must be contained in the launch assembly 380. In other words, the spacecraft envelope 306 is a volume into which the spacecraft 350 must fit in order to be launched by the launch vehicle using the payload adaptor 300. For example, a payload bay of the launch vehicle can at least partially define contours of the spacecraft envelope 306 for each spacecraft 350. In some implementations, the payload adaptor 300 can be ring-shaped and oriented concentrically with a longitudinal axis 310 of the launch vehicle, and the spacecraft envelope 306 for each spacecraft can include a circumferentially extending portion of an annular region defined between the payload adaptor 300 and a cylindrical outer wall 308 of the payload bay of the launch vehicle. Other configurations for the payload adaptor 300 and the spacecraft envelope 306 are also contemplated.

The payload adaptor 300 can include multiple adaptor port rings 302. Each adaptor port ring 302 defines an adaptor port 304 configured to couple to a corresponding spacecraft 350. The launch assembly 380 can include the separation ring 352 configured to couple the spacecraft 350 to a corresponding adaptor port ring 302. The separation ring 352 can further be configured to selectively cause separation of the spacecraft 350 from the payload adaptor 300, for example after the launch vehicle has delivered the spacecraft 350 to an intended release orbit. The separation ring 352 can define a separation ring aperture 354 that is generally aligned with and in fluid communication with the adaptor port 304 when the separation ring is coupled between the adaptor port ring 302 and the spacecraft 350. A ring-normal direction 358 can be defined parallel to a central axis L of the separation ring aperture 354.

For example, the payload adaptor 300 can be implemented as a standard EELV Secondary Payload Adaptor (ESPA) ring, developed in association with the Evolved Expendable Launch Vehicle (EELV) program originally administered by the United States Air Force, with each adaptor port 304 having a 15-inch diameter. Further in the example, the separation ring 352 can be implemented as a 15-inch Advanced Lightband (ALB) manufactured by Rocket Lab/Planetary Systems Corporation, located in Silver Springs, Maryland. For another example, the payload adaptor 300 can be implemented as a standard Grande ESPA ring, with each adaptor port 304 having a 24-inch diameter, and the separation ring 352 can be implemented as a 24-inch ALB. For another example, the payload adaptor 300 can be implemented as a Small Launch ESPA ring, with each adaptor port 304 having an 8-inch diameter, and the separation ring 352 can be implemented as an 8-inch ALB. Other implementations of the payload adaptor 300 or the separation ring 352 are also contemplated.

FIG. 4A is a schematic elevation view of an integrated ion thruster unit 400 mounted on the spacecraft 350 in the launch assembly 380. FIG. 4B is a schematic perspective view of an example embodiment of the integrated ion thruster unit 400 in combination with the separation ring 352. FIG. 4C is a schematic sectional view of an example interior 200 of the integrated ion thruster unit 400, taken along lines C-C shown in FIG. 4B.

The integrated ion thruster unit 400 can include a unit housing 402 including a thrust face 404. A plurality of tiles 100 can be arranged in an array 428 on the thrust face 404. For example, the plurality of the tiles 100 can be coupled to the unit housing 402 and oriented such that the tiles are exposed to an exterior of the unit housing 402 on the thrust face 404, and such that each tile 100 is in an adjacent edge-to-edge relationship with at least one other tile 100 in the array 428. The tiles can be oriented to align the thrust direction 101 normal to the thrust face 404 (that is, the tiles 100 can be oriented in a plane parallel to the thrust face 404). Other orientations and placements for some or all of the tiles 100 are also contemplated.

In some embodiments, the array of tiles 100 can number at least fifty tiles 100. Further, in some embodiments, the array of tiles can number at least one hundred tiles 100. Further, in some embodiments, the array of tiles can number at least five hundred tiles 100. Other numbers of tiles 100 in the array 428 are also contemplated.

The tiles 100 can be affixed to the thrust face 404 in any suitable fashion. For example, the integrated ion thruster unit 400 can include brackets 212 arranged on the thrust face 404 to position the tiles 100 in the array 428 with respect to the unit housing 402. More specifically, the brackets 212 can be configured for affixing of the tiles 100 thereto. In particular, the brackets 212 can be configured to avoid or limit interference with the transport of the ionic liquid propellant to the emitter 104, as discussed in more detail below. Other implementations for affixing the tiles 100 to the thrust face 404 are also contemplated.

The array of tiles 100 can be sized and arranged to enable a cross-sectional profile of the unit housing 402 to be received through the separation ring aperture 354. Moreover, various other components of the integrated ion thruster unit 400 that can be included within the unit housing 402 are discussed below, and the other components can be arranged in the unit housing 402 to further enable a cross-sectional profile of the unit housing 402 to be received through the separation ring aperture 354. For example, the cross-sectional profile can be a widest cross-sectional area of the unit housing 402 as measured perpendicular to the ring-normal direction 358. Moreover, in some embodiments the cross-sectional profile can further be received through the adaptor port 304 when the adaptor port 304 is in fluid communication with the separation ring aperture 354. In some embodiments, an inner diameter of the adaptor port 304 and an inner diameter of the separation ring aperture 354 are each within a range of 11 to 16 inches. For example, in the embodiment illustrated in FIG. 4B, the payload adaptor 300 can be implemented as the ESPA, for which the inner diameter of the adaptor port 304 is about 13.5 inches, and the separation ring 352 can be implemented as the 15-inch ALB, for which the separation ring aperture 354 has an inner diameter of about 12.4 inches. The separation ring 352 can further include a portion 356 of a release mechanism extending chordwise through the separation ring aperture 354 at a minimum distance of about 3.8 inches from a center of the separation ring aperture 354. As discussed above, each tile 100 can have a square profile with the width 108 and length 110 each equal to about 1.3 cm (see FIG. 1A). To accommodate being received through the separation ring aperture 354 (and, it follows, through the slightly larger adaptor port 304), the array 428 can include one hundred forty-four tiles 100 arranged in eight rows of eighteen tiles each. Other tile sizes and numbers and arrangements of tiles 100 in the array 428 that enable the cross-sectional profile of the unit housing 402 to be received through the separation ring aperture 354 are also contemplated.

As is well known, the spacecraft envelope 306 imposes a constraint on the size of the spacecraft 350, and this constraint can limit an overall capability or functionality of the spacecraft. For example, if a conventional chemical or ion propulsion system (not shown) were to be included on the spacecraft 350 to provide one or more of orbital maneuvering, station keeping, or the like, such a conventional system would typically occupy a significant portion of the spacecraft envelope 306, thereby limiting a remaining volume available for the intended payload of the spacecraft 350. Notably, in embodiments in which the arrangements of components enables the cross-sectional profile of the unit housing 402 to be received through and extend within the separation ring aperture 354 (and, optionally, the adaptor port 304), the integrated ion thruster unit 400 can be positioned in a fashion that enables a much larger portion of the spacecraft envelope 306 to be dedicated to the intended payload of the spacecraft 350, as compared to an amount of the spacecraft envelope 306 occupied by conventional propulsion systems.

More specifically, the separation ring 352 can extend from a first edge 360, adjacent to the spacecraft 350, to a second edge 362, adjacent to the payload adaptor 300, such that the separation ring aperture 354 extends through the separation ring 352 from the first edge 360 to the second edge 362 along the axis L (in other words, along the ring-normal direction 358). The first edge 360 can be viewed as a dividing plane between a payload adaptor side 366 of the first edge and a spacecraft side 368 of the first edge. The launch assembly 380 can include the integrated ion thruster unit 400 positioned with respect to the spacecraft 350 such that the unit housing 402 extends within the separation ring aperture 354 and extends substantially to the payload adaptor side 366 of the first edge 360 when the separation ring couples the spacecraft 350 to the adaptor port ring 302 for launch. In this context, "substantially" means that fifty percent or more of the volume occupied by the integrated ion thruster unit 400 is positioned to the payload adaptor side 366 of the first edge 360. Moreover, in some embodiments, the launch assembly 380 includes the integrated ion thruster unit 400 positioned such that the unit housing 402 extends predominantly to the payload adaptor side 366 of the first edge 360. In this context, "predominantly" means that, as shown in FIG. 4B, at least seventy-five percent of the volume occupied by the integrated ion thruster unit 400 is positioned to the payload adaptor side 366 of the first edge 360.

Embodiments of the launch assembly 380 are also contemplated in which the unit 400 is not, or cannot be, positioned such that the unit housing 402 extends substantially to the payload adaptor side 366 of the first edge 360 when the spacecraft 350 (to which the integrated ion thruster unit 400 is coupled) is attached to the adaptor port ring 302 for launch. Moreover, embodiments of the integrated ion thruster unit 400 that are not receivable within the separation ring aperture 354 are also contemplated.

It should be understood that, in the example embodiment, the capability of the separation ring 352 for causing separation of the spacecraft 350 from the payload adaptor 300 is completely independent from the functionality of the integrated ion thruster unit 400. However, embodiments in which the integrated ion thruster unit 400 contributes to separation of the spacecraft 350 from the payload adaptor 300 are also contemplated.

The integrated ion thruster unit 400 can be configured to contain, within the interior 200 of the unit housing 402, a propellant feed system 210 that contains a sufficient amount of an ionic liquid propellant 234 to feed the tiles 100 in the array 428 throughout a life cycle of the unit. The propellant feed system 210 can include one or more reservoirs 230 contained within the unit housing 402. Each reservoir 230 can be configured to contain an amount of the ionic liquid propellant 234 for use by a subset of the tiles 100 in the array 428 during an operational phase of the integrated ion thruster unit 400. In the illustrated example, one reservoir 230 is shown in fluid communication with a subset of tiles 100 located within nine columns of the array 428, and additional reservoirs 230 (not shown) can be included to provide the ionic liquid propellant 234 for other subsets of tiles 100 in the array 428. Other combinations of reservoirs 230 in fluid communication with different subsets of tiles 100 are also contemplated (including, in some examples, the use of a single reservoir 230 to feed all of the tiles in the array).

The one or more reservoirs 230 can be configured to convey the ionic liquid propellant 234 towards the tiles 100 in any suitable fashion. For example, the reservoir 230 can contain a porous material configured to transfer the ionic liquid propellant 234 towards the tiles 100 via capillary action. Other implementations for the one or more reservoirs 230 are also contemplated.

As noted above, the brackets 212 can be configured to facilitate delivery of the ionic liquid propellant 234 to the tiles 100. For example, each bracket 212 can define a bracket channel 246 extending therethrough in the thrust direction 101 and positioned to register with the frame channel 146 of the tile 100 affixed thereto. More specifically, the bracket channel 246 can be configured to couple the frame channel 146 (and, therefore, the wetting surface 120 of the emitter 104) of the affixed tile into fluid communication with the reservoir 230. In some embodiments, the propellant feed system 210 further includes wicks 238 positioned within the registered bracket channels 246 and frame channels 146. For example, each of the wicks 238 can extend from the reservoir 230, through a corresponding registered bracket channel 246 and frame channel 146, to the wetting surface 120. The wicks 238 can include fibers configured to wick the ionic liquid propellant 234 from the reservoir 230 through the registered channels to the wetting surface 120. Other implementations for establishing fluid communication between the reservoir 230 and the wetting surface 120 are also contemplated.

The integrated ion thruster unit 400 also includes one or more electrodes 220 that extend within the unit housing 402 and are configured to apply the voltage the ionic liquid propellant 234 in contact with the emitters 104, thereby causing emission of ions from the emitter tips 116 (shown in FIG. 2) in the thrust direction 101. For example each electrode 220 can extend within a corresponding one of the one or more reservoirs 230. The one or more electrodes 220 can be operatively coupled to a power source, such as power source 410. More specifically, each electrode 220 can be selectively energized by the power source, and the electrode 220 can be positioned to electrically communicate the resulting applied voltage throughout the ionic liquid propellant 234 in fluid communication between the electrode 220 and the emitters 104 in the subset of tiles 100 in fluid communication with that reservoir 230. Other distributions of electrodes 220 among reservoirs 230 are also contemplated. When the electrode 220 is energized, an electric field effect caused by the shape of the tips 116 results in the emission of ions from the ionic liquid propellant 234 at the tips 116.

In the illustrated embodiment, each electrode 220 extends within the corresponding reservoir 230 adjacent to the thrust face 404. However, other locations for the electrode 220 relative to the unit housing 402 are also contemplated. The electrode 220 can be formed from a suitable conductive material, such as but not limited to a porous activated carbon fiber (ACF) material.

The propellant feed system 210 can also include one or more storage tanks 232 enclosed within the unit housing 402 and configured to store the ionic liquid propellant 234, for example during a pre-operations phase. The one or more storage tanks 232 can be selectively coupled into fluid communication with the one or more reservoirs 230 via one or more valves 236. In the illustrated embodiment, each reservoir 230 is coupled in selective flow communication with a corresponding one of the storage tanks 232 by one valve 236. However, other numbers of and connections between reservoirs 230, storage tanks 232, and valves 236 are also contemplated.

The inclusion of one or more storage tanks 232 separate from, and selectively coupleable in fluid communication with, the one or more reservoirs 230 enables isolation of the ionic liquid propellant 234 from the tiles 100 until commencement of thrust operations. For example, the one or more storage tanks 232 can be filled with the ionic liquid propellant 234 prior to coupling of the integrated ion thruster unit 400 to the launch assembly 380. The one or more valves 236 can remain closed to prevent the one or more reservoirs 230 from receiving the ionic liquid propellant 234 until on-orbit operation of the integrated ion thruster unit 400 is desired. For example, the one or more valves 236 can remain closed throughout phases such as, but not limited to, ground operations (for example, assembly of the integrated ion thruster unit, coupling of the integrated ion thruster unit to a spacecraft), launch of the spacecraft (including the integrated ion thruster unit) into orbit on a launch vehicle, separation of the spacecraft (including the integrated ion thruster unit) from the launch vehicle, and on-orbit idling of the spacecraft. In response to the spacecraft reaching or approaching an on-orbit operations phase that requires thrust from the integrated ion thruster unit, the one or more valves 236 can be opened to supply the one or more reservoirs 230 with the ionic liquid propellant 234 from the one or more tanks 232. Isolation of the ionic liquid propellant 234 from the tiles 100 until the commencement of thrust operations significantly reduces a risk of unintended deposition of the ionic liquid propellant 234 on surfaces of the tiles 100 and the thrust face 404 that could create a short circuit pathway between the emitter 104 and the extractor 106.

Alternatively, the one or more valves 236 can be used to supply the ionic liquid propellant 234 from the tanks 232 to the reservoirs 230 at any suitable time, or the ionic liquid propellant 234 can be preloaded or stored in the one or more reservoirs 230 and the storage tanks 232 can be omitted.

A volume occupied by the propellant feed system 210 depends from the thrust face into the unit housing 402 to a depth 426 parallel to the thrust direction 101 defined by the tiles. For example, the thrust direction 101 can be parallel to the ring-normal direction 358 when the launch assembly 380 is assembled. As noted above, the components of the integrated ion thruster unit 400 can be arranged in the unit housing 402 to enable a cross-sectional profile of the unit housing 402 to be received through the separation ring aperture 354. To that end, in some embodiments, the depth 426 can be less than a depth 424 of the unit housing measured parallel to the thrust direction. Other depths and placements of the propellant feed system 210 with respect to the unit housing 402 are also contemplated.

The integrated ion thruster unit 400 can include one or more additional components (in addition to the tiles 100, the propellant feed system 210, and the electrodes 220). The unit housing 402 can include one or more additional component regions configured to house the one or more additional components. For example, considering in this context the thrust face 404 as a front of the integrated ion thruster unit 400, the unit housing 402 can enclose one or more rear additional component regions 406 located behind, with respect to the thrust direction 101, the depth 426 of the propellant feed system 210. For another example, the unit housing 402 can enclose one or more adjacent additional component regions 408 located adjacent to the propellant feed system 210 with respect to the thrust direction 101.

The one or more additional components can include propulsion-related components 410 (that is, components specific to propulsion and the operation of the tiles 100). For example, as noted above, the propulsion-related components 410 can include one or more power sources 410 configured to supply a voltage to the emitters 104 of the tiles 100 in the array 428. For example, the one or more power sources 410 can be configured to supply a voltage that meets or exceeds the threshold voltage of the emitters 104 across the tiles 100. In the illustrated example, the propulsion-related component 410 is positioned in the rear additional component region 406, however, positioning of propulsion-related components 410 in the adjacent additional component region 408 is also contemplated.

The one or more additional components can also include non-propulsion-related components 420 (that is, related to support or mission functions for the spacecraft 350 other than propulsion). The non-propulsion-related components 420 can include one or more suitable implementations of subsystems typically provided on a satellite bus platform. For example, the non-propulsion-related components 420 can include one or more of: a guidance, navigation, and control (GNC) subsystem; an avionics subsystem; a command and data handling (C&DH) subsystem; a ground communication subsystem; a gyroscope subsystem an inertial management unit (IMU) subsystem; a mission data processing subsystem; a radiation sensor subsystem; a positioning, navigation and timing (PNT) subsystem; an electrical power system (EPS) control subsystem; or a battery subsystem. The non-propulsion-related components 420 can serve as backup or redundant to corresponding subsystems provided elsewhere on the spacecraft 350, or can serve as the primary subsystems. In the illustrated example, the non-propulsion-related component 420 is positioned in the adjacent additional component region 408, however, positioning of propulsion-related components 410 in the rear additional component region 406 is also contemplated. In some implementations, inclusion of the one or more non-propulsion-related components 420 within the unit housing 402 further enables a correspondingly larger portion of the spacecraft envelope 306 to be dedicated to the intended payload of the spacecraft 350, as discussed above. Additionally or alternatively, inclusion of the one or more non-propulsion-related components 420 within the unit housing 402, wherein the integrated ion thruster unit 400 is provided as a complete, ready-to-connect unit, can enable faster and cheaper design and manufacture of the spacecraft 350.

In addition to requiring less volume than conventional on-board propulsion systems in the spacecraft envelope 306 available for launch of the spacecraft 350, the features of the integrated ion thruster unit 400 discussed herein can also facilitate retrofitting of the integrated ion thruster unit 400 to the spacecraft 350 after the spacecraft 350 is already in orbit. For example, the spacecraft 350 may have been previously launched with a conventional on-board propulsion system or initial integrated ion thruster unit 400, and the conventional on-board propulsion system or initial integrated ion thruster unit 400 may have spent its usable propellant store or otherwise have become unsuited for further operation. The retrofit integrated ion thruster unit 400 can be delivered to an orbital rendezvous with the spacecraft 350, and mechanically coupled to the spacecraft 350 in orbit. For example, a portion of a separation ring 352 can remain affixed to the spacecraft 350 from the initial deployment of the spacecraft, and the integrated ion thruster unit 400 can be positioned within the separation ring aperture 354 and coupled to the separation ring 352 in a similar fashion as described above. Other implementations for coupling the integrated ion thruster unit 400 to the spacecraft 350 in connection with the on-orbit retrofit are also contemplated. The retrofitted integrated ion thruster unit 400 can provide a self-contained, turnkey on-board propulsion system that can extend a useful lifetime of the spacecraft 350.

In some embodiments the retrofitted integrated ion thruster unit 400 can include one or more non-propulsion-related components 420, as discussed above. For example, the non-propulsion-related component 420 can include a ground communication system configured to enable ground-based control of the retrofitted integrated ion thruster unit 400. For another example, the non-propulsion-related component 420 can include a replacement subsystem configured to replace a functionality of an original subsystem of the spacecraft 350 that may have degraded. For another example, the non-propulsion-related component 420 can include a subsystem that adds a new non-propulsion capability to the spacecraft 350.

FIG. 5 is a perspective view of another example integrated ion thruster unit 400. As in the embodiment of FIG. 4B, the integrated ion thruster unit 400 again can include the plurality of tiles 100 can be arranged in an array (here designated array 528) on the thrust face 404, the thrust direction 101 can be parallel to the ring-normal direction 358, and the volume occupied by the propellant feed system 210 can depend from the thrust face 404 into the unit housing 402 to the depth 426 parallel to the ring-normal direction 358. Other elements of the integrated ion thruster unit 400 are numbered the same as in FIG. 4.

The components of the integrated ion thruster unit 400 can again be arranged in the unit housing 402 to enable the cross-sectional profile of the unit housing 402 to be received through the separation ring aperture 354, and further through the adaptor port 304. In some embodiments, an inner diameter of the adaptor port 304 and an inner diameter of the separation ring aperture 354 are each within a range of 20 to 26 inches. For example, in the embodiment illustrated in FIG. 5, the payload adaptor 300 can be implemented as the Grande ESPA ring, with each adaptor port 304 having a nominal 24-inch diameter, and the separation ring 352 can be implemented as a 24-inch ALB. Each tile 100 can again have a square profile with the width 108 and length 110 each equal to about 1.3 cm (see FIG. 1A).

To accommodate being received through the separation ring aperture 354 (and, it follows, through the slightly larger adaptor port 304), the array 528 in this case can include five hundred thirteen tiles 100, arranged with two hundred twenty-five tiles in a central pattern of nine rows by twenty-five columns, and one hundred forty-four tiles each of two flanking patterns of sixteen rows by nine columns. Other tile sizes and numbers and arrangements of tiles 100 in the array 528 that enable the cross-sectional profile of the unit housing 402 to be received through the separation ring aperture 354 are also contemplated.

In addition, the embodiment of FIG. 5 can again include the one or more propulsion-related components 410, the non-propulsion-related components 420, or both, housed within the unit housing 402 and positioned in either or both of the rear additional component region 406 or the adjacent additional component region 408, as discussed above.

Notably, as can be seen by comparing the embodiments of FIGs. 4B and 5, the volume available for an increased number of tiles 100 (and thus a larger maximum available thrust, more or larger reservoirs 230 and storage tanks 232 (and thus a larger propellant load), and an increased number of the propulsion-related components 410 and the non-propulsion-related components 420 grows exponentially as a radius of the separation ring aperture 354 increases. Accordingly, a correspondingly larger volume within the spacecraft envelope 306 can be conserved for the intended payload of the spacecraft 350 in embodiments in which the unit housing 402 extends substantially or almost entirely to the payload adaptor side of the first edge 360 when the spacecraft 350 (to which the integrated ion thruster unit 400 is coupled) is attached to the adaptor port ring 302 for launch, as discussed above.

It should be understood that embodiments of the integrated ion thruster unit 400 are not limited to the sizes of the payload adaptor 300, adaptor ports 304, or separation ring aperture 354 discussed in the examples above. In some embodiments, an inner diameter of the adaptor port 304 and an inner diameter of the separation ring aperture 354 are each within a range of 6 to 11 inches. For example, as noted above, the payload adaptor 300 can be implemented as a Small Launch ESPA ring, with each adaptor port 304 having a nominal 8-inch diameter, and the separation ring 352 can be implemented as an 8-inch ALB. For another example, an inner diameter of the adaptor port 304 and an inner diameter of the separation ring aperture 354 can each be within a range of 16 to 20 inches. In each case, arrangements of the array of tiles 100 and the propellant feed system 210 can be similarly constructed to accommodate the unit housing 402 being received through the separation ring aperture 354 of the 8-inch ALB.

Other sizes and types of payload adaptors are also contemplated. Moreover, it should be understood that embodiments of the integrated ion thruster unit 400 are not limited to being coupled to the spacecraft in a location that extends through separation ring during payload assembly, but rather can be coupled to the spacecraft at any suitable location (and can have any suitable size).

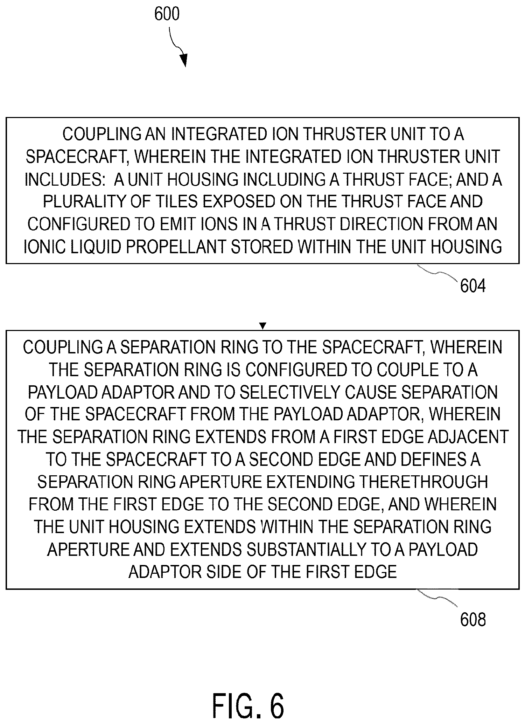

FIG. 6 illustrates an example method 600 of assembling a launch assembly, such as the launch assembly 380. The method 600 can include steps including one or more of: coupling an integrated ion thruster unit to a spacecraft, wherein the integrated ion thruster unit includes: a unit housing including a thrust face; and a plurality of tiles exposed on the thrust face and configured to emit ions in a thrust direction from an ionic liquid propellant stored within the unit housing

(604); and coupling a separation ring to the spacecraft, wherein the separation ring is configured to couple to a payload adaptor and to selectively cause separation of the spacecraft from the payload adaptor, wherein the separation ring extends from a first edge adjacent to the spacecraft to a second edge and defines a separation ring aperture extending therethrough from the first edge to the second edge, and wherein the unit housing extends within the separation ring aperture and extends substantially to a payload adaptor side of the first edge (608).

In some embodiments, the steps further include receiving a cross-sectional profile of the unit housing through the separation ring aperture.

In certain embodiments, an inner diameter of the separation ring aperture is within a range of 11 to 16 inches.

In some embodiments, an inner diameter of the separation ring aperture is within a range of 20 to 26 inches.

In certain embodiments, the steps further include coupling the separation ring to an adaptor port of the payload adaptor, wherein the adaptor port ring defines an adaptor port in fluid communication with the separation ring aperture, and wherein the unit housing extends within the adaptor port.

In some embodiments, the steps further include coupling the separation ring such that the unit housing extends predominantly to the payload adaptor side of the first edge.

In certain embodiments, the steps further include coupling one or more reservoirs within the unit housing, wherein the one or more reservoirs are configured to contain the ionic liquid propellant for use by the tiles in the array.

In some embodiments, the steps further include: coupling one or more storage tanks within unit housing, wherein the one or more storage tanks are configured to store the ionic liquid propellant during a pre-operations phase of the spacecraft; and coupling one or more valves between the one or more storage tanks and the one or more reservoirs, wherein the one or more valves are configured to selectively couple the one or more storage tanks into fluid communication with the one or more reservoirs.

In certain embodiments, the integrated ion thruster unit further includes a propellant feed system that depends into the unit housing from the thrust face, and the steps further include housing at least one additional component region within the unit housing, wherein the at least one additional component region includes one or both of: one or more rear additional component regions located behind, with respect to the thrust direction, the propellant feed system; and one or more adjacent additional component regions located adjacent to the propellant feed system with respect to the thrust direction.

In some embodiments, the steps further include coupling one or more additional components within the at least one additional component region, wherein the one or more additional components include a first additional component selected from among a guidance, navigation, and control (GNC) subsystem; an avionics subsystem; a command and data handling (C&DH) subsystem; a ground communication subsystem; a gyroscope subsystem an inertial management unit (IMU) subsystem; a mission data processing subsystem; a radiation sensor subsystem; a positioning, navigation and timing (PNT) subsystem; an electrical power system (EPS) control subsystem; or a battery subsystem.

Additional or alternative steps as indicated by the discussion herein are also contemplated.

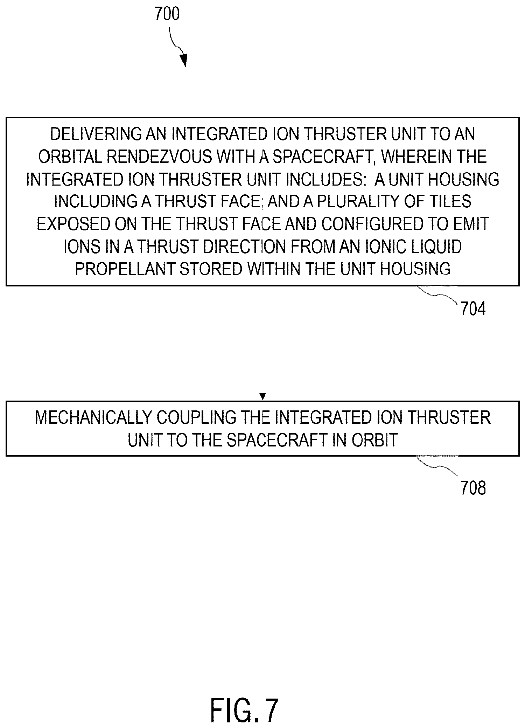

FIG. 7 illustrates an example method 700 of retrofitting an integrated ion thruster unit, such as the integrated ion thruster unit 400, to a spacecraft. The method 700 can include steps including one or more of: delivering the integrated ion thruster unit to an orbital rendezvous with the spacecraft, wherein the integrated ion thruster unit includes: a unit housing including a thrust face; and a plurality of tiles exposed on the thrust face and configured to emit ions in a thrust direction from an ionic liquid propellant stored within the unit housing (704); and mechanically coupling the integrated ion thruster unit to the spacecraft in orbit (708).

In some embodiments, a portion of a separation ring remains affixed to the spacecraft from an initial deployment of the spacecraft, and the steps further include positioning the integrated ion thruster unit within a separation ring aperture defined by the portion of the separation ring.

In certain embodiments, an inner diameter of the separation ring aperture is within a range of 6 to 11 inches.

In some embodiments, an inner diameter of the separation ring aperture is within a range of 11 to 16 inches.

In certain embodiments, an inner diameter of the separation ring aperture is within a range of 16 to 20 inches.

In some embodiments, an inner diameter of the separation ring aperture is within a range of 20 to 26 inches.

In certain embodiments, the steps further include coupling the integrated ion thruster unit to the portion of the separation ring.

In some embodiments, the steps further include coupling one or more additional components to the spacecraft, wherein the one or more additional components are housed in at least one additional component region within the unit housing.

In certain embodiments, the one or more additional components include a first additional component selected from among a guidance, navigation, and control (GNC) subsystem; an avionics subsystem; a command and data handling (C&DH) subsystem; a gyroscope subsystem an inertial management unit (IMU) subsystem; a mission data processing subsystem; a radiation sensor subsystem; a positioning, navigation and timing (PNT) subsystem; an electrical power system (EPS) control subsystem; or a battery subsystem.

In some embodiments, the steps further include coupling a ground communication system to the spacecraft, wherein the ground communications system is housed in the unit housing and configured to enable ground-based control of the integrated ion thruster unit.

In certain embodiments, the spacecraft includes an original non-propulsion-related subsystem having a degraded performance, and the steps further include coupling a replacement subsystem to the spacecraft, wherein the replacement subsystem is housed in the unit housing and configured to replace a functionality of the original non-propulsion-related subsystem.

In some embodiments, the steps further include coupling a new subsystem to the spacecraft, wherein the new subsystem is housed in the unit housing and configured to add a new non-propulsion-related capability to the spacecraft.

Additional or alternative steps as indicated by the discussion herein are also contemplated.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

Claim language reciting "at least one of" refers to at least one of a set and indicates that one member of the set or multiple members of the set satisfy the claim. For example, claim language reciting "at least one of A and B" means A, B, or A and B.

Some aspects of the disclosure are set out in the following numbered clauses:
1. An integrated ion thruster unit for a spacecraft, the integrated ion thruster unit comprising:
   a unit housing comprising a thrust face; and
   a plurality of tiles arranged in an array on the thrust face, wherein each of the tiles comprises:
      an emitter comprising a plurality of tips configured to emit ions in a thrust direction from an ionic liquid propellant in response to an applied voltage; and
      an extractor configured to provide a reference voltage with respect to the emitter.
2. The integrated ion thruster unit according to clause 1, wherein each of the tiles further comprises:
   a frame coupled to the emitter and the extractor, wherein the frame is configured to establish a spaced and oriented relationship between the emitter and the extractor.
3. The integrated ion thruster unit according to clause 2, wherein the frame comprises:
   a first surface configured for positioning of the emitter thereon; and
   a second surface positioned beyond the first surface in the thrust direction and configured for positioning of the extractor thereon.
4. The integrated ion thruster unit according to clause 1, wherein the emitter further comprises:
   a base surface; and
   a plurality of emitter bodies extending away from the base surface in the thrust direction, wherein each of the emitter bodies extends to a corresponding one of the tips.
5. The integrated ion thruster unit according to clause 4, wherein the emitter further comprises a wetting surface opposite the base surface, and wherein the emitter is configured to wick the ionic liquid propellant from the wetting surface to the tips.
6. The integrated ion thruster unit according to clause 1, wherein each of the tiles defines a width in a range of about 0.25 to 3 centimeters (cm) and a length in a range of about 0.25 to 3 cm, and wherein the plurality of tips numbers in a range between 200 and 10,000 per each of the tiles.
7. The integrated ion thruster unit according to clause 1, wherein the plurality of tiles in the array numbers at least fifty.
8. The integrated ion thruster unit according to clause 1, wherein the plurality of tiles in the array numbers at least one hundred.
9. The integrated ion thruster unit according to clause 1, wherein the plurality of tiles in the array numbers at least five hundred.
10. The integrated ion thruster unit according to clause 1, further comprising one or more reservoirs contained within the unit housing and configured to contain the ionic liquid propellant for use by the tiles in the array.
11. The integrated ion thruster unit according to clause 10, wherein the one or more reservoirs comprise a porous material configured to transfer the ionic liquid propellant towards the tiles via capillary action.
12. The integrated ion thruster unit according to clause 10, further comprising:
   one or more storage tanks enclosed within the unit housing and configured to store the ionic liquid propellant during a pre-operations phase of the spacecraft; and
   one or more valves configured to selectively couple the one or more storage tanks into fluid communication with the one or more reservoirs.
13. The integrated ion thruster unit according to clause 10, wherein each of the one or more reservoirs is in fluid communication with a different subset of the tiles in the array.
14. The integrated ion thruster unit according to clause 1, further comprising brackets arranged on the thrust face to position the tiles in the array with respect to the unit housing, and wherein the tiles in the array are affixed to the brackets.
15. The integrated ion thruster unit according to clause 14, further comprising one or more reservoirs configured to contain the ionic liquid propellant for use by the tiles in the array, wherein each of the tiles further comprises a frame coupled to the emitter and the extractor, wherein the emitter includes a wetting surface, wherein the frame defines a frame channel extending therethrough, wherein each of the brackets defines a bracket channel extending therethrough and registered with the frame channel of the tile affixed thereto, and wherein the bracket channel couples the frame channel and the wetting surface of the affixed tile into fluid communication with the one or more reservoirs.
16. The integrated ion thruster unit according to clause 15, further comprising a wick positioned within the bracket channel and the registered frame channel.
17. The integrated ion thruster unit according to clause 1, further comprising one or more electrodes extending within the unit housing and configured to apply the applied voltage to the ionic liquid propellant in contact with the emitter of each of the plurality of tiles.
18. The integrated ion thruster unit according to clause 17, further comprising one or more reservoirs configured to contain the ionic liquid propellant for use by the tiles in the array, wherein each of the one or more electrodes extends within a corresponding one of the one or more reservoirs adjacent to the thrust face.
19. The integrated ion thruster unit according to clause 1, further comprising a propellant feed system that depends into the unit housing from the thrust face, wherein the unit housing encloses at least one additional component region comprising one or both of:
   one or more rear additional component regions located behind, with respect to the thrust direction, the propellant feed system; and
   one or more adjacent additional component regions located adjacent to the propellant feed system with respect to the thrust direction.
20. The integrated ion thruster unit according to clause 19, further comprising one or more additional components located in the at least one additional component region, wherein the one or more additional components include a first additional component selected from among a guidance, navigation, and control (GNC) subsystem; an avionics subsystem; a command and data handling (C&DH) subsystem; a ground communication subsystem; a gyroscope subsystem an inertial management unit (IMU) subsystem; a mission data processing subsystem; a radiation sensor subsystem; a positioning, navigation and timing (PNT) subsystem; an electrical power system (EPS) control subsystem; or a battery subsystem.
21. A launch assembly comprising:
   a spacecraft;
   an integrated ion thruster unit coupled to the spacecraft, wherein the integrated ion thruster unit comprises:
      a unit housing including a thrust face; and
      a plurality of tiles exposed on the thrust face and configured to emit ions in a thrust direction from an ionic liquid propellant stored within the unit housing; and
   a separation ring coupled to the spacecraft and configured to couple to a payload adaptor and to selectively cause separation of the spacecraft from the payload adaptor, wherein the separation ring extends from a first edge adjacent to the spacecraft to a second edge and defines a separation ring aperture extending therethrough from the first edge to the second edge, and wherein the unit housing extends within the separation ring aperture and extends substantially to a payload adaptor side of the first edge.
22. The launch assembly according to clause 21, wherein a cross-sectional profile of the unit housing is receivable through the separation ring aperture.
23. The launch assembly according to clause 22, wherein an inner diameter of the separation ring aperture is within a range of 6 to 11 inches.
24. The launch assembly according to clause 22, wherein an inner diameter of the separation ring aperture is within a range of 11 to 16 inches.
25. The launch assembly according to clause 22, wherein an inner diameter of the separation ring aperture is within a range of 16 to 20 inches.
26. The launch assembly according to clause 22, wherein an inner diameter of the separation ring aperture is within a range of 20 to 26 inches.
27. The launch assembly according to clause 21, further comprising the payload adaptor coupled to the separation ring, wherein the payload adaptor comprises an adaptor port ring that defines an adaptor port in fluid communication with the separation ring aperture, wherein the separation ring couples the spacecraft to the adaptor port ring, and wherein the unit housing extends within the adaptor port.
28. The launch assembly according to clause 21, wherein the unit housing extends predominantly to the payload adaptor side of the first edge.
29. The launch assembly according to clause 21, wherein the integrated ion thruster unit further comprises one or more reservoirs configured to contain the ionic liquid propellant for use by the tiles.
30. The launch assembly according to clause 29, wherein the integrated ion thruster unit further comprises:
   one or more storage tanks enclosed within the unit housing and configured to store the ionic liquid propellant during a pre-operations phase of the spacecraft; and
   one or more valves configured to selectively couple the one or more storage tanks into fluid communication with the one or more reservoirs.
31. The launch assembly according to clause 21, wherein the integrated ion thruster unit further comprises a propellant feed system that depends into the unit housing from the thrust face, and wherein the unit housing encloses at least one additional component region comprising one or both of:
   one or more rear additional component regions located behind, with respect to the thrust direction, the propellant feed system; and
   one or more adjacent additional component regions located adjacent to the propellant feed system with respect to the thrust direction.
32. The launch assembly according to clause 31, further comprising one or more additional components located in the at least one additional component region, wherein the one or more additional components include a first additional component selected from among a guidance, navigation, and control (GNC) subsystem; an avionics subsystem; a command and data handling (C&DH) subsystem; a ground communication subsystem; a gyroscope subsystem an inertial management unit (IMU) subsystem; a mission data processing subsystem; a radiation sensor subsystem; a positioning, navigation and timing (PNT) subsystem; an electrical power system (EPS) control subsystem; or a battery subsystem.
33. A method of assembling a launch assembly, the method comprising:
   coupling an integrated ion thruster unit to a spacecraft, wherein the integrated ion thruster unit includes:
      a unit housing including a thrust face; and
      a plurality of tiles exposed on the thrust face and configured to emit ions in a thrust direction from an ionic liquid propellant stored within the unit housing; and
   coupling a separation ring to the spacecraft, wherein the separation ring is configured to couple to a payload adaptor and to selectively cause separation of the spacecraft from the payload adaptor, wherein the separation ring extends from a first edge adjacent to the spacecraft to a second edge and defines a separation ring aperture extending therethrough from the first edge to the second edge, and wherein the unit housing extends within the separation ring aperture and extends substantially to a payload adaptor side of the first edge.
34. The method according to clause 33, further comprising receiving a cross-sectional profile of the unit housing through the separation ring aperture.
35. The method according to clause 34, wherein an inner diameter of the separation ring aperture is within a range of 6 to 11 inches.
36. The method according to clause 34, wherein an inner diameter of the separation ring aperture is within a range of 11 to 16 inches.
37. The method according to clause 34, wherein an inner diameter of the separation ring aperture is within a range of 16 to 20 inches.
38. The method according to clause 34, wherein an inner diameter of the separation ring aperture is within a range of 20 to 26 inches.
39. The method according to clause 33, further comprising coupling the separation ring to an adaptor port of the payload adaptor, wherein the adaptor port ring defines an adaptor port in fluid communication with the separation ring aperture, and wherein the unit housing extends within the adaptor port.
40. The method according to clause 33, further comprising coupling the separation ring such that the unit housing extends predominantly to the payload adaptor side of the first edge.
41. The method according to clause 33, further comprising coupling one or more reservoirs within the unit housing, wherein the one or more reservoirs are configured to contain the ionic liquid propellant for use by the tiles.
42. The method according to clause 41, further comprising:
   coupling one or more storage tanks within unit housing, wherein the one or more storage tanks are configured to store the ionic liquid propellant during a pre-operations phase of the spacecraft; and
   coupling one or more valves between the one or more storage tanks and the one or more reservoirs, wherein the one or more valves are configured to selectively couple the one or more storage tanks into fluid communication with the one or more reservoirs.
43. The method according to clause 33, wherein the integrated ion thruster unit further includes a propellant feed system that depends into the unit housing from the thrust face, the method further comprising housing at least one additional component region within the unit housing, wherein the at least one additional component region includes one or both of:
   one or more rear additional component regions located behind, with respect to the thrust direction, the propellant feed system; and
   one or more adjacent additional component regions located adjacent to the propellant feed system with respect to the thrust direction.
44. The method according to clause 43, further comprising coupling one or more additional components within the at least one additional component region, wherein the one or more additional components include a first additional component selected from among a guidance, navigation, and control (GNC) subsystem; an avionics subsystem; a command and data handling (C&DH) subsystem; a ground communication subsystem; a gyroscope subsystem an inertial management unit (IMU) subsystem; a mission data processing subsystem; a radiation sensor subsystem; a positioning, navigation and timing (PNT) subsystem; an electrical power system (EPS) control subsystem; or a battery subsystem.
45. A method of retrofitting an integrated ion thruster unit to a spacecraft, the method comprising:
   delivering the integrated ion thruster unit to an orbital rendezvous with the spacecraft, wherein the integrated ion thruster unit includes:
      a unit housing including a thrust face; and
      a plurality of tiles exposed on the thrust face and configured to emit ions in a thrust direction from an ionic liquid propellant stored within the unit housing; and
   mechanically coupling the integrated ion thruster unit to the spacecraft in orbit.
46. The method according to clause 45, wherein a portion of a separation ring remains affixed to the spacecraft from an initial deployment of the spacecraft, and wherein the method further comprises positioning the integrated ion thruster unit within a separation ring aperture defined by the portion of the separation ring.
47. The method according to clause 46, wherein an inner diameter of the separation ring aperture is within a range of 6 to 11 inches.
48. The method according to clause 46, wherein an inner diameter of the separation ring aperture is within a range of 11 to 16 inches.
49. The method according to clause 46, wherein an inner diameter of the separation ring aperture is within a range of 16 to 20 inches.
50. The method according to clause 46, wherein an inner diameter of the separation ring aperture is within a range of 20 to 26 inches.
51. The method according to clause 46, further comprising coupling the integrated ion thruster unit to the portion of the separation ring.
52. The method according to clause 45, further comprising coupling one or more additional components to the spacecraft, wherein the one or more additional components are housed in at least one additional component region within the unit housing.
53. The method according to clause 52, wherein the one or more additional components include a first additional component selected from among a guidance, navigation, and control (GNC) subsystem; an avionics subsystem; a command and data handling (C&DH) subsystem; a gyroscope subsystem an inertial management unit (IMU) subsystem; a mission data processing subsystem; a radiation sensor subsystem; a positioning, navigation and timing (PNT) subsystem; an electrical power system (EPS) control subsystem; or a battery subsystem.
54. The method according to clause 45, further comprising coupling a ground communication system to the spacecraft, wherein the ground communications system is housed in the unit housing and configured to enable ground-based control of the integrated ion thruster unit.
55. The method according to clause 45, wherein the spacecraft includes an original non-propulsion-related subsystem having a degraded performance, wherein the method further comprises coupling a replacement subsystem to the spacecraft, and wherein the replacement subsystem is housed in the unit housing and configured to replace a functionality of the original non-propulsion-related subsystem.
56. The method according to clause 45, further comprising coupling a new subsystem to the spacecraft, wherein the new subsystem is housed in the unit housing and configured to add a new non-propulsion-related capability to the spacecraft.

## Claims

1. An integrated ion thruster unit for a spacecraft, the integrated ion thruster unit comprising:
a unit housing comprising a thrust face; and
a plurality of tiles arranged in an array on the thrust face, wherein each of the tiles comprises:
an emitter comprising a plurality of tips configured to emit ions in a thrust direction from an ionic liquid propellant in response to an applied voltage; and
an extractor configured to provide a reference voltage with respect to the emitter.

2. The integrated ion thruster unit according to Claim 1, wherein each of the tiles further comprises:
a frame coupled to the emitter and the extractor, wherein the frame is configured to establish a spaced and oriented relationship between the emitter and the extractor.

3. The integrated ion thruster unit according to Claim 2, wherein the frame comprises:
a first surface configured for positioning of the emitter thereon; and
a second surface positioned beyond the first surface in the thrust direction and configured for positioning of the extractor thereon.

4. The integrated ion thruster unit according to Claim 1, wherein the emitter further comprises:
a base surface; and
a plurality of emitter bodies extending away from the base surface in the thrust direction, wherein each of the emitter bodies extends to a corresponding one of the tips.

5. The integrated ion thruster unit according to Claim 4, wherein the emitter further comprises a wetting surface opposite the base surface, and wherein the emitter is configured to wick the ionic liquid propellant from the wetting surface to the tips.

6. The integrated ion thruster unit according to Claim 1, wherein the plurality of tiles in the array numbers at least fifty.

7. The integrated ion thruster unit according to Claim 1, further comprising one or more reservoirs contained within the unit housing and configured to contain the ionic liquid propellant for use by the tiles in the array.

8. The integrated ion thruster unit according to Claim 7, wherein the one or more reservoirs comprise a porous material configured to transfer the ionic liquid propellant towards the tiles via capillary action.

9. The integrated ion thruster unit according to Claim 7, further comprising:
one or more storage tanks enclosed within the unit housing and configured to store the ionic liquid propellant during a pre-operations phase of the spacecraft; and
one or more valves configured to selectively couple the one or more storage tanks into fluid communication with the one or more reservoirs.

10. The integrated ion thruster unit according to Claim 7, wherein each of the one or more reservoirs is in fluid communication with a different subset of the tiles in the array.

11. The integrated ion thruster unit according to Claim 1, further comprising brackets arranged on the thrust face to position the tiles in the array with respect to the unit housing, and wherein the tiles in the array are affixed to the brackets.

12. The integrated ion thruster unit according to Claim 11, further comprising one or more reservoirs configured to contain the ionic liquid propellant for use by the tiles in the array, wherein each of the tiles further comprises a frame coupled to the emitter and the extractor, wherein the emitter includes a wetting surface, wherein the frame defines a frame channel extending therethrough, wherein each of the brackets defines a bracket channel extending therethrough and registered with the frame channel of the tile affixed thereto, and wherein the bracket channel couples the frame channel and the wetting surface of the affixed tile into fluid communication with the one or more reservoirs.

13. The integrated ion thruster unit according to Claim 12, further comprising a wick positioned within the bracket channel and the registered frame channel.

14. The integrated ion thruster unit according to Claim 1, further comprising one or more electrodes extending within the unit housing and configured to apply the applied voltage to the ionic liquid propellant in contact with the emitter of each of the plurality of tiles.

15. The integrated ion thruster unit according to Claim 14, further comprising one or more reservoirs configured to contain the ionic liquid propellant for use by the tiles in the array, wherein each of the one or more electrodes extends within a corresponding one of the one or more reservoirs adjacent to the thrust face.
